# EUROPEAN PATENT APPLICATION

(11) **EP 1 724 634 A1**
(43) Date of publication of application: **22.11.2006**
(21) Application number: 05010679.8
(22) Date of filing: 17.05.2005
(51) Int. Cl.: G02F 1/39

(54) **Method and device for parametric amplification of ultra-short light pulses**

(71) Applicant: Max-Planck-Gesellschaft zur Förderung der Wissenschaften e.V., 80539 München (DE)
(72) Inventor: Ishii, Nobuhisa, 85748 München (DE); Baltuska, Andrius, 85748 München (DE); Teisset, Catherine Yuriko, 80339 Müchen (DE); Krausz, Ferenc, 85748 München (DE); Zheltikov, Aleksei, 125124 Moscow (RU)
(74) Representative: Heusler, Wolfgang

(57) **Abstract**

The invention relates to a method and a device for parametric amplification of ultra-short light pulses, comprising generating seed pulses and pump pulses, and generating signal pulses by an interaction of the seed pulses and the pump pulses in an optical-parametric amplifier, and further comprising generating clock pulses by frequency-shifting a fraction of the seed pulses with a frequency shifter device and seeding an optical amplifier device with the clock pulses for generating the pump pulses.

## Description

The present invention relates to a method for parametric amplification of ultra-short light pulses, wherein amplified signal pulses are generated by a non-linear interaction of seed and pump pulses in an optical parametric amplifier. Furthermore, the present invention relates to an optical parametric amplification device including seed and pump pulse sources and an optical parametric amplifier.

Amplification of a pulsed optical signal (hereafter referred to as "seed") through an instantaneous parametric interaction with another, strong optical pulse (hereafter referred to as "pump") requires precise temporal synchronization of these two seed and pump pulses. The pump and the seed wavelengths must differ from each other to enable energy transfer from the pump wave (optical field), comprised of high-energy photons, to two principal waves that are produced as optical pulses in a parametric amplification process and are termed "signal" and "idler". The combined optical frequency of these two waves equals the pump optical frequency. The signal pulses, which are the amplified seed pulses, retain the input frequency of the seed. The resultant pulse duration of the amplified wave is mostly determined by the seed bandwidth. Very broadband (several hundred nanometers wide) seed spectra are required for amplification of few-cycle optical pulses.

There are at least three known approaches to dealing with the problem of pump-seed synchronization in a short-pulse optical parametric amplifier (OPA).

The first class of solutions relies on driving the OPA with a single laser source based on a consecutive laser amplification scheme. Here, either the frequency of the OPA seed pulse or of the OPA pump pulse is changed after boosting the pulse energy from a master-oscillator (MO) in a power-amplifier (PA) to the µJ-J energy range. In conventional practice, the single MO-PA approach to driving an OPA includes the technical implementations of using a traveling-wave optical parametric generator (OPG) (see: "Matching of group velocities in three-wave parametric interaction with femtosecond pulses and application to traveling-wave generators", P. Di Trapani, et al., J. Opt. Soc. Am. B Volume 12, page 2237 (1995)), a white-light-seeded OPA (see: "Noncollinearly phase-matched femtosecond optical parametric amplification with a 2000 cm-1 bandwidth", A. Shirawaka, et al., Appl. Phys. Lett. Volume 72 (2), page 147 (1998)) or a broadband laser-seeded OPA (see: "High-power parametric amplification of 11.8-fs laser pulses with carrier-envelope phase control", R. Th. Zinkstok et al., Opt. Lett. Volume 30, page 78 (2005)). In all these cases, the fundamental frequency of the MO-PA system or its optical harmonic(s) is used as the OPA pump. While the single-laser-source approach provides a very reliable pump-seed synchronization, there is an essential disadvantage in terms of a lack of flexibility in a laser system that has to achieve a compromise between the features that are required, on the one hand, for the generation of a broadband seed and, on the other hand, for the intense amplification of rather narrowband pump pulses.

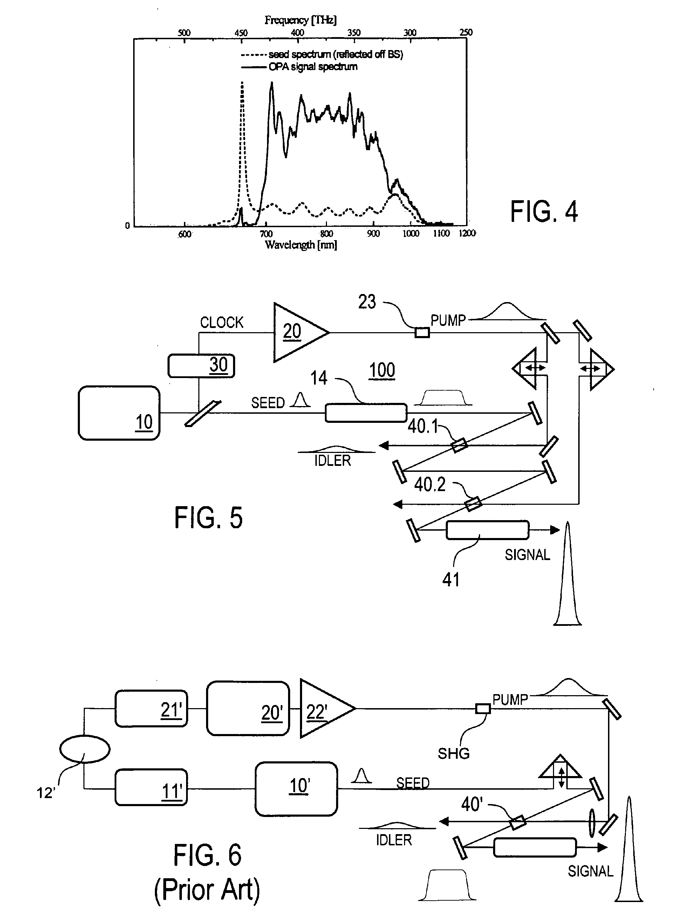

The second class of synchronization solutions employs two parallel laser sources (or two laser chains). One of them specializes in generating a broadband seed, while the other one takes care of amplifying the pump pulse at its own frequency. To enable parametric amplification, the MO's of both sources must be synchronized through active cavity length control of one or both of them. An example for this second approach with two laser sources is schematically illustrated in Figure 6 (prior art). The conventional optical parametric amplification device comprises a broadband low energy oscillator as a seed source 10' in combination with an active cavity length stabilization 11', a narrowband low energy oscillator 20' in combination with an active cavity length stabilization 21' and an amplifier 22' for providing high-energy pump pulses and a master clock 12' controlling the cavity length stabilizations 11' and 21'. In order to obtain a non-linear interaction of the seed and pump pulses in an optical parametric amplifier crystal 40', a precise synchronization of the sources 10' and 20' is strictly necessary.

While the two-source approach has a higher flexibility with regard to the independent provision of the broadband seed and the narrowband pump sources, there are numerous disadvantages, such as the instability of electronic cavity length stabilisations, an involvement of cumbersome electronic loop(s), the presence of two master oscillators and their pump sources and a lost of pump-seed time delay upon relocking of servo loop(s).

According to a third class of solutions, the simultaneous generation of a broadband emission (suitable for OPA seeding) and a frequency-shifted line (suitable for pump laser seeding) using a single MO output has been proposed in practice. As an example, self-stabilization of two cavities lasing at the seed and pump wavelengths, respectively, via a nonlinear optical mechanism has been used by Z. Wei et al. in "Opt. Lett." (vol. 26, 2001, p. 1806). However, this method is not easy to implement as the complexity of the MO is even higher than that of two single-cavity MO's. H. Zeng et al. ("Appl. Phys. B", vol. 79, 2004, p. 837) have proposed to employ an inefficient MO-driven OPG and a cw pre-amplification. However the OPG in the nJ regime is inherently inefficient, as is the cw pre-amplification. In addition, an expensive cw pump source is needed or has to be shared with the MO.

The object of the invention is to provide an improved method for parametric amplification of ultra-short light pulses avoiding the disadvantages of the above techniques. According to a particular aspect, the object of the invention is to provide the parametric amplification without the need for an active electronic cavity length stabilisation or any corresponding control loop, while providing the full flexibility of the above two-source approach. Furthermore, the object of the invention is to provide an improved optical parametric amplification device avoiding the disadvantages of the conventional techniques and having a simplified optical set-up without a lost of operation stability or flexibility.

These objects are solved with a parametric amplification method and an optical parametric amplification device comprising the features of claims 1 or 8, respectively. Advantageous embodiments and applications of the invention are defined in the dependent claims.

According to a first aspect, the present invention is based on the general technical teaching of providing a method for parametric amplification of ultra-short light pulses by a non-linear interaction of seed and pump pulses, wherein the pump pulses are generated with an optical amplifier device seeded with clock pulses, which are obtained by frequency-shifting a fraction of the seed pulses. This fraction of the seed-pulses is frequency-shifted with a passive frequency shifter device. An essential advantage of the invention is given by the fact that there is only one master oscillator (MO) which generates the seed pulses used for the parametric amplification as such as well as for the provision of the clock pulses having an inherent synchronisation with the seed pulses. On the other hand, the optical amplifier device can be optimized independently for pumping the optical parametric amplifier. The provision of the clock pulses with the frequency shifter device yields a synchronized pump and seed pulses in the optical amplifier device without a detectible timing jitter. Accordingly, the method of the invention combines the advantages of the one-source approach in terms of inherent synchronisation with the advantages of the two-source approach in terms of flexibility. Furthermore, the method of the invention minimizes inconveniencies, which were associated with running of independent laser chains in the prior art techniques.

A further advantage of the invention is given by the fact that there are no particular restrictions with regard to the type of the frequency shifter device. Generally, any type of frequency shifter device can be used, which has an output spectrum adapted to the gain profile of the optical amplifier device. As an example, the frequency shifter device could be adapted for broadening the spectrum of the splitted seed pulse fraction. However, according to a preferred embodiment of the invention, a non-linear wave-guide is used. The non-linear wave-guide is selected for achieving efficient frequency shift by confining low energy pulses, which provides clock pulses with a spectral distribution having a local peak intensity according to the gain profile of the optical amplifier device. After the non-linear wave-guide, a fraction of the seeded pulse energy is frequency-shifted to the required spectral component so that the seeding efficiency into the optical amplifier device is improved.

A photonic crystal fiber is one of the existing non-linear wave-guides. According to a particularly preferred embodiment, a photonic crystal fibre is used for generating the clock pulses. Photonic crystal fibres have particular advantages as they produce the required frequency-shifted spectral components with high efficiency. Furthermore, they allow a flexibility of the clock pulse spectrum by simple adjustments of the optical set-up. Photonic crystal fibres are known as such (see e.g. P. Russell in "Science", vol. 299, 2003, p. 358).

Using a photonic crystal fibre for seeding and optical amplifier device represents an independent subject of the present invention.

Preferably, the output spectrum of the clock pulses and in particular the frequency shifted spectral component for seeding the optical amplifier device is adjusted by setting at least one or a combination of the following parameters. Firstly, an input power of the seed pulse fraction which has been input to the frequency shifter device can be adjusted for selecting the spectral properties of the clock pulses. Secondly, a polarisation parameter of the seed pulse fraction, or thirdly, an in-coupling angle of the seed pulse fraction can be adjusted. All these types of adjustment allow a simple control with conventional optical components including e.g. filters, polarizers and mirrors. This easy adjustment of the clock pulses represents an essential advantage in particular compared with the above third prior art approach with complex adjustment structures.

Further advantages for an effective optical parametric amplification are obtained by at least one of the following measures. If the seed pulses are subjected to a pulse stretcher before the non-linear interaction with the pump pulses, the time overlap of both can be increased yielding an improved effectiveness of the parametric amplification process. Furthermore, the output of the optical amplifier device can be subjected to a further harmonic frequency generation, e.g. a SHG (second harmonic generator). This yields a further flexibility for selecting the frequencies of the pump and seed pulses used for parametric amplification.

According to a second aspect, the present invention is based on the general technical teaching of providing an optical parametric amplification device for providing ultra-short light pulses, wherein a frequency shifter device is included for providing frequency-shifted clock pulses derived from seed pulses and a pump pulse source including an optical amplifier device capable to be seeded with the frequency-shifted clock pulses.

Preferably, the optical parametric amplification device comprises a broadband fs oscillator, e.g. Ti:sapphire-based oscillator as a seed pulse source and a ps- or ns-pulse laser, e.g. a Nb-doped or Yb-doped solid state laser, as the optical amplifier device of the pump pulse source wherein a passive and pump-free non-linear wave-guide frequency shifter, e.g. a photonic crystal fibre is employed for deriving a seed (the clock pulses) for the optical amplifier device.

A further advantage of the optical parametric amplification device according the invention is given by the flexible design of the pump pulse source, which may comprise e.g. a single optical amplifier device only or a chain of at least two optical amplifier devices like e.g. a chain of solid state lasers. This allows the provision of pump pulses with any intensity required for the optical-parametric process.

Further details and advantages of the invention are described in the following with reference to the attached drawings. In the drawings show:
- Figure 1:: a schematic representation of a first embodiment of the optical parametric amplification device according to the invention;
- Figure 2:: a schematic representation of a further embodiment of the optical parametric amplification device according to the invention with further details;
- Figures 3, 4:: spectral properties of ultra-short light pulses used with the method of the invention;
- Figure 5:: a schematic representation of a further embodiment of the optical parametric amplification device according to the invention; and
- Figure 6:: a schematic representation of a conventional optical parametric amplification device (prior art).

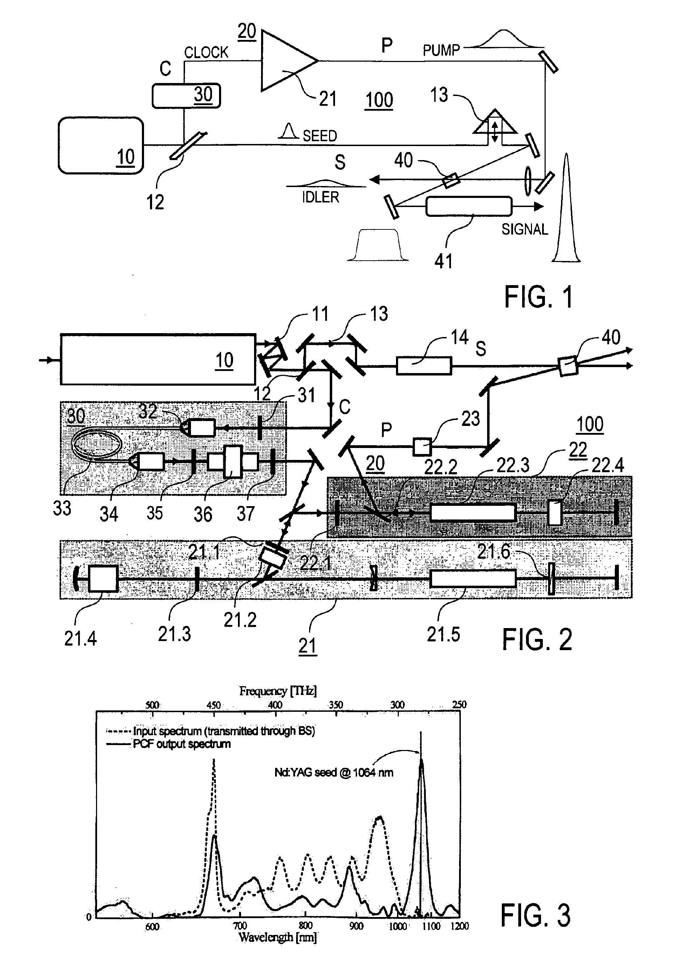

The general principles and features of the invention are schematically illustrated in Figure 1, which shows an optical parametric amplification device 100 comprising a seed pulse source 10, a pump pulse source 20, a frequency shifter device 30 and an optical-parametric amplifier 40. The optical parametric amplification device 100 includes further optical components, like e.g. mirrors, lenses and polarizer's, which per se are known from prior art.

The seed pulse source 10 comprises a broadband, low energy laser emitting seed pulses with a central wavelength in the visible range of the electromagnetic spectrum. As an example, the oscillator is a Ti:sapphire-laser, which is pumped with a solid-state laser (not shown), e.g. Verdi V6, cw-mode, 6 W, 532 nm. Typically, the seed pulses have a central wavelength of 800 nm (FWHM: 250 nm, a pulse width of 7 fs and a repetition rate of 70 MHz. Pulses emitted from the seed pulse source 10 are split into two paths, namely a main seed path S directed to the optical-parametric amplifier 40 and a clock path C directed to the pump pulse source 20. The main path S includes a delay component 13 and optionally a pulse stretcher (see Figures 2, 5).

The pump pulse source 20 comprises the optical amplifier device 21 and a SHG crystal. As an example, the optical amplifier device 21 is a solid-state amplifier e.g. a Nd:YAG amplifier. With the illustrated embodiment, the pump pulse source 20 consists of the optical amplifier device 21 only. According to variations, a chain of amplifiers can be included in the device 20.

The clock path C is directed from the beam splitter 12 to the optical amplifier device 21. A fraction of the seed source output is travelling along the clock path C. As an example, the beam splitter 12 is adapted for deflecting a fraction of about 50 % into the clock path C.

The frequency shifter device 30 is arranged in the clock path C between the seed pulse source 10 and the optical amplifier device 21. The frequency shifter device 30 includes a non-linear crystalline optical fibre, e.g. the commercially available fibre NL-PH-750, manufacturer: Crystal Fibre. The output spectrum of the optical fibre (clock pulses, CLOCK) includes a wavelength peak shifted to the near-infrared. This spectral range includes enough energy (hundreds of ps) to be amplified in an amplifier system. The optical amplifier 21 is seeded with the clock pulses for generating amplified pump pulses.

Along the pump path P, the pump pulses (PUMP) are directed to the optical-parametric amplifier 40, where the seed and pump pulses are superimposed with each other as it is known from the prior art of optical-parametric amplification.

The output of the optical-parametric amplifier 40 comprise signal pulses (SIGNAL), which have the same wavelength like the seed pulses and idler pulses (IDLER). The signal pulses are subjected to a pulse compression with the compressor 41 as it is known in the art.

Further details and variations of the optical parametric amplification device are illustrated in Figure 2. The output of the continuously pumped seed pulse source 10 (Ti:sapphire laser, 6 fs, 5 nJ, 70 MHz) is directed via an array of chirped mirrors 11 to the beam splitter 12. Seed pulses are deflected on the seed path S including the delay component 13 and the pulse stretcher 14 to the optical-parametric amplifier 40. The pulse stretcher 14 is a 10 cm SF 57 stretcher.

A fraction of the seed pulse source output is directed to the clock path C including the frequency shifter device 30. The frequency shifter device 30 comprises a first half-wave plate 31, a first microscope objective lens 32, a photonic crystal fibre 33, a second microscope objective lens 34, a second half-wave plate 35, a faraday isolator 36 and a third half-wave plate 37. Additionally, a filter may be provided for adjusting the input power of the pulses injected into the fibre 33.

The first half-wave plate 31 is arranged for tuning an input polarization parameter of the split seed pulse fraction. The input polarization parameter selected for a particular application is tuned in dependence on the spectral component to be obtained in the output of the photonic crystal fibre 33. The first microscope objective lens 32 is adapted for focussing the low-energy seed pulse fraction into the first end of the photonic crystal fibre 33. The microscope objective lens 32 is positioned on a carrier, so that the in-coupling angle of the light pulses can be adjusted. By changing the in-coupling angle of the light pulses, the exact position of the spectral component of the clock pulses can be controlled.

The photonic crystal fibre 33 has a length of preferably at least 4 cm, e.g. 10 cm. The core diameter of the fibre 33 is 1.6 µm. The length of the fibre 33 is at least the interaction length required for obtaining the spectral shift that matches the gain profile of the optical amplifier device 21.

The second microscope objective lens 34 at the end of the fibre 33 collimates the clock pulses into the further clock path. The remaining components 35 to 37 of the frequency shifter device 30 are adapted for suppressing back reflections from the amplifiers into the frequency-shifter device 30.

With the illustrated embodiment, the pump pulse source 20 comprises the optical amplifier device 21 and a 2-pass post amplifier 22. The optical amplifier device 21 is a ND:YAG regenerative amplifier including a half-wave plate 21.1, a faraday rotator 21.2, a quarter-wave plate 21.3, a Pockels cell 21.4, the active amplification medium 21.5 (ND: YAG) and an intra-cavity etalon 21.6. The amplifying material 21.5 is continuously pumped with laser diodes.

The clock pulses from the frequency shifter device are injected into the amplifier 21 that delivers pump pulses (210 µJ at a 10 kHz repetition rate). The amplified pulses are ejected after about 30 round trips in the cavity of the amplifier 21. Depending on the thickness of the intra-cavity etalon 21.6, the output FWHM pulse duration can be varied in the range of 20 to 32 ps for the fixed amount of cavity around trips.

The pump pulses ejected from the optical amplifier device 21 are injected to the two paths post amplifier 22 including a further half-wave plate 22.1, a thin-film polarizer 22.2., the amplifying medium 22.3 (ND: YAG) and a faraday rotator 22.4. The pump pulses output from the amplifier 21 are amplified in the two paths amplifier 22 to 1.6 nJ. The amplifying medium 22.3 comprises a Nd:YAG amplifier with a diameter of 4 mm.

The output of the two paths post amplifier 22 is passed through a SHG crystal 23 comprising a 10 mm long LBO crystal with a 50% conversion efficiency. As a result, pump pulses with a repetition rate of 10 kHz, a wavelength of 532 nm and an energy of 0.8 mJ and the signal with a repetition rate of 70 MHz and an energy of 25 nJ are submitted to the optical parametric amplifier 40. The optical parametric amplifier 40 comprises a BBO crystal (thickness 5 mm). The amplified signal pulses have a repetition frequency of 10 kHz, a wavelength in the range 700 to 1000 nm and an energy of 20 µJ. The SHG crystal 23 in the pump path P is provided optionally.

Figure 3 illustrates the spectral properties of the seed pulse fraction (dotted) input into the frequency shifter device 30 and the spectral properties of the clock pulses (drawn line) output from the frequency shifter device 30. The spectra illustrate the optimum adaptation of the spectral peak of the clock pulses to the gain profile of the amplifier medium Nd:YAG.

The seed pulses were stretched in a dispersive glass block to attain efficient pump-to-signal energy conversion. The spectrum of the resultant 20-µJ amplified signal pulses is depicted in Figure 4 and corresponds to a nearly maximum theoretical bandwidth for the given crystal and pumping configuration. Remarkably, the broadband amplified spectrum shown in Figure 4 is reliably reproduced each working day without any need to adjust the pump-seed delay, which has been previously impossible in the actively stabilized OPCPA setup.

Figure 5 illustrates a further modification of the optical parametric amplification device 100 according to the invention, wherein the signal pulse obtained from a first optical-parametric amplification at the optical-parametric amplifier 40.1 is used for a further amplification at a second optical-parametric amplifier 40.2. The second optical-parametric amplifier 40.2. receives pump pulses from the same pump pulse source 30 as shown in Figure 1. In this case, two separate delay components are provided for adjusting the simultaneous superposition of the pulses in the amplifier crystals.

## Claims

1. Method for parametric amplification of ultra-short light pulses, comprising the steps of:
- generating seed pulses,
- generating pump pulses, and
- generating signal pulses by an interaction of the seed pulses and the pump pulses in an optical-parametric amplifier (40, 40.1, 40.2),
**characterized by** the further steps of:
- generating clock pulses by frequency-shifting a fraction of the seed pulses with a frequency shifter device (30), and
- seeding an optical amplifier device (21) with the clock pulses for generating the pump pulses.

2. Method according to claim 1, wherein a non-linear waveguide is used as the frequency shifter device (30).

3. Method according to claim 2, wherein a photonic crystal fibre (33) is used as the frequency shifter device (30).

4. Method according to at least one of the foregoing claims, wherein the clock pulses are generated with a clock pulse spectrum being adjusted in dependence on at least one of a power, a polarization parameter and an in-coupling angle of the fraction of the seed pulses.

5. Method according to at least one of the foregoing claims, wherein the seed pulses are subjected to a pulse stretching.

6. Method according to at least one of the foregoing claims, wherein an output of the optical amplifier device (21) is subjected to a harmonic frequency shift.

7. Method of using a photonic crystal fibre for seeding an optical amplifier device (21) being arranged for generating pump pulses for an optical-parametric amplifier (40, 40.1, 40.2).

8. Optical parametric amplification device for parametric amplification of ultra-short light pulses, comprising:
- a seed pulse source (10) for generating seed pulses,
- a pump pulse source (20) for generating pump pulses, and
- an optical-parametric amplifier (40, 40.1, 40.2),
**characterized in that**
- a frequency shifter device (30) is provided for generating clock pulses by frequency-shifting a fraction of the seed pulses, and
- the pump pulse source (20) comprises an optical amplifier device (21) being optically coupled with the frequency shifter device (30).

9. Optical parametric amplification device according to claim 8, wherein the frequency shifter device (30) comprises a non-linear waveguide.

10. Optical parametric amplification device according to claim 9, wherein the frequency shifter device (30) comprises a photonic crystal fibre (31).

11. Optical parametric amplification device according to at least one of the claims 8 to 10, wherein the frequency shifter device (30) comprises an adjustment device (31, 32) for adjusting at least one of a power, a polarization parameter and an incoupling angle of the fraction of the seed pulses.

12. Optical parametric amplification device according to at least one of the claims 8 to 11, further comprising a pulse stretching device (14).

13. Optical parametric amplification device according to at least one of the claims 8 to 12, further comprising a harmonic frequency shifter (23) for frequency-shifting an output of the optical amplifier device (21).

14. Optical parametric amplification device according to at least one of the claims 8 to 13, wherein the seed pulse source (10) comprises a Ti-sapphire based oscillator.

15. Optical parametric amplification device according to at least one of the claims 8 to 14, wherein the amplifying oscillator (21) comprises at least one ps or ns solid state laser.
